# EUROPÄISCHE PATENTSCHRIFT

(11) **EP 2 452 578 B1**
(45) Veröffentlichungstag und Bekanntmachung des Hinweises auf die Patenterteilung: **05.11.2014**
(21) Anmeldenummer: 10191063.6
(22) Anmeldetag: 12.11.2010
(51) Int. Cl.: A23N 4/24, B03B 5/36, B03B 5/48, B03B 5/56

(54) **Vorrichtung und Verfahren zum Trennen von Pflanzenteilen**
Method and device for separating plant parts
Dispositif et procédé destinés à la séparation de parties de plantes

(43) Veröffentlichungstag der Anmeldung: 16.05.2012
(73) Patentinhaber: Kronen GmbH, 77694 Kehl-Goldscheuer (DE)
(72) Erfinder: Hahn, Thomas, 77656, Offenburg (DE)
(74) Vertreter: Straube, Urs Norman

(56) Entgegenhaltungen:
- DE-A1- 2 056 130
- DE-A1- 4 107 679
- DE-A1-102009 025 843
- DE-B- 1 057 542
- US-A- 2 426 398
- US-A- 4 223 688
- US-A- 4 750 995
- US-B1- 6 213 308
- US-B1- 6 988 622

## Beschreibung

Die vorliegende Erfindung betrifft eine Vorrichtung zum Trennen von Pflanzenteilen gemäß dem Oberbegriff des Patentanspruchs 1 und ein Verfahren zum Trennen von Pflanzenteilen gemäß dem Oberbegriff des Patentanspruchs 15.

Eine Vorrichtung zum Trennen von Pflanzenteilen, die aus der DE 2056130 bekannt ist, umfasst eine Strömungswanne, die eine Einlasseinrichtung und eine Auslasseinrichtung für ein Fluid aufweist, und eine Abtransporteinrichtung, die eingerichtet ist, Pflanzenteile von der Oberfläche des Fluids in der Strömungswanne abzutransportieren. Die Pflanzenteile, bei denen es sich beispielsweise um ganze Äpfel handelt, fallen durch einen Trichter in einen Einfüllbereich der Strömungswanne. Die Einlasseinrichtung ist als Zuflussleitung ausgebildet, die in dem Einfüllbereich in die Strömungswanne mündet, und durch welche das Fluid Wasser in die Strömungswanne gepumpt wird. Die Auslasseinrichtung ist als Überlauf, über den das Wasser abläuft, auf der gegenüberliegenden Seite ausgebildet. Das ablaufende Wasser fließt durch ein Trennsieb und wird von der Pumpe zurück in die Strömungswanne gepumpt. In der Strömungswanne strömt das Fluid kontinuierlich von der Zuleitung zu dem Überlauf. Die Abtransporteinrichtung ist als Förderband ausgebildet, welches in einer oberen Schicht des Wassers in der Strömungswanne endet. Die eingefüllten Äpfel unterscheiden sich durch ihr spezifisches Gewicht voneinander. Äpfel ohne Wasserkern, die mit geringer Wahrscheinlichkeit verfaulen, schwimmen an der Wasseroberfläche und treiben zu dem Förderband, von dem sie abtransportiert werden. Äpfel mit Wasserkern, die mit hoher Wahrscheinlichkeit verfaulen, sinken zunächst ab und treiben unter dem Förderband hindurch. Die Strömung führt sie dann zu dem Überlauf nach oben mit. Schließlich werden sie durch das Trennsieb von dem überlaufenden Wasser getrennt.

Ein Nachteil einer derartigen Vorrichtung besteht darin, dass die Strömung in der Strömungswanne sehr inhomogen ist. Es können sich daher Bereich bilden, in denen das Wasser nahezu ruht und in denen sich die Pflanzenteile aufstauen. Ein weiterer Nachteil einer derartigen Vorrichtung besteht darin, dass ein hoher Durchsatz außerdem nur durch eine hohe Strömungsgeschwindigkeit durch die Zuleitung erreicht werden kann. Dies führt zu Turbulenzen in der Strömungswanne, welche einer Trennung der Pflanzenbestandteile nach dem spezifischen Gewicht erschweren. Die Vorrichtung ist zudem nicht geeignet Pflanzenteile nach einem weiteren Kriterium voneinander zu trennen.

Aus der US 6,988,622 B1, der US 6,231,308 B1 und der US 4,223,688 sind Vorrichtungen zum Trennen von Pflanzenteilen gemäß dem Oberbegriff des Patentanspruchs 1 bekannt, die jeweils eine Strömungswanne, die eine Einlasseinrichtung und eine Auslasseinrichtung für ein Fluid aufweist, eine Abtransporteinrichtung, die eingerichtet ist, Pflanzenteile von der Oberfläche des Fluids in der Strömungswanne abzutransportieren, und eine Größentrenneinrichtung, die eingerichtet ist, Pflanzenteile unterschiedlicher Größe voneinander zu trennen, umfassen. Die US 6,988,622 B1 ist speziell für Paprikas vorgesehen.

Ein Nachteil dieser Vorrichtung liegt jedoch darin, dass sie das Gewebe der Fruchtwand, das als Lebensmittel weiterverarbeitet werden soll, nicht von sämtlichen Samen trennen kann.

Der vorliegenden Erfindung liegt die Aufgabe zugrunde, eine weitere Vorrichtung und ein weiteres Verfahren zum Trennen von Pflanzenteilen zu schaffen.

Die der Erfindung zugrunde liegende Aufgabe wird durch eine Vorrichtung mit den Merkmalen des kennzeichnenden Teils des Patentanspruchs 1 und ein Verfahren mit den Merkmalen des kennzeichnenden Teils des Patentanspruchs 15 gelöst.

Die vorliegende Erfindung betrifft eine Vorrichtung zum Trennen von Pflanzenteilen, wobei die Einlasseinrichtung mehrere Düsen aufweist, die an zwei gegenüberliegenden Längsseiten der Strömungswanne angeordnet sind, um eine gleichmäßige Strömung zu erzeugen, die weitgehend frei von Turbulenzen ist. Durch Sinkscheidung können die Pflanzenteile in der Regel nur in zwei Fraktionen getrennt werden. Vorteilhafterweise können die Pflanzenteile nicht nur nach dem spezifischen Gewicht, sondern mittels der Größentrenneinrichtung auch nach der Größe getrennt werden. Bei den Pflanzenteilen handelt es sich zum Beispiel um zerkleinerte Fruchtstücke aus unterschiedlichem Gewebe, insbesondere um Paprikastücke, die Gewebe des Stielansatzes, Gewebe der Fruchtwand, planzetales Gewebe und Samen umfassen. Sowohl das Gewebe der Fruchtwand als auch die Samen haben eine größere spezifische Dichte als Wasser. Die Pflanzenteile aus dem Gewebe der Fruchtwand sind in der Regel jedoch größer als die Samen. Durch die Vorrichtung zum Trennen von Pflanzenteilen können somit nicht nur das ungenießbare Gewebe des Stielansatzes und das ungenießbare, planzetale Gewebe von dem genießbaren Gewebe der Fruchtwand getrennt werden, sondern die ungenießbaren Samen können ebenfalls von den Paprikastücken aus Gewebe der Fruchtwand effektiv und vollautomatisch mithilfe der Größentrenneinrichtung getrennt werden, so dass die genießbaren Paprikastücke aus der Fruchtwand beispielsweise für die Weiterverarbeitung zu Fertigsalat vollständig von den ungenießbaren Teilen der Paprikas getrennt werden können.

In einer bevorzugten Ausführungsform sind die Düsen sind bevorzugt in einem Sinkscheidungsbereich in mindestens zwei, in Längsrichtung verlaufenden Reihen übereinander angeordnet, wobei zwei gegenüberliegende Reihen nahe bei der Fluidoberfläche verlaufen. Entlang dieser Reihen beträgt der Abstand der Düsen vorzugsweise weniger als 20 Zentimeter, noch besser weniger als 15 Zentimeter. Auf eine Länge von 10 Zentimeter entlang einer Längsseite ist somit durchschnittlich mindestens eine Düse vorgesehen. Eine ausreichende Anzahl von Düsen und ein geringer Abstand der Düsen sind erforderlich, um eine gleichmäßige Strömung zu erzeugen, die weitgehend frei von Turbulenzen ist, so dass Pflanzenteile bei einem hohen Durchsatz zuverlässig nach dem spezifischen Gewicht getrennt werden können.

In einer Weiterbildung der bevorzugten Ausführungsform sind weitere Düsen an einer Kurzseite der Strömungswanne angeordnet. Bei dieser Kurzseite werden die Pflanzenteile in die Strömungswanne eingebracht. Die weiteren Düsen sorgen dafür, dass die Pflanzenteile schnell beschleunigt und weiter befördert werden.

In noch einer bevorzugten Ausführungsform ist die Auslasseinrichtung als Überlauf ausgebildet. Dies bewirkt, dass in der Strömungswanne ein minimaler Füllstand immer sichergestellt ist.

In einer Weiterbildung der letztgenannten bevorzugten Ausführungsform ist der Überlauf an einer weiteren Kurzseite der Strömungswanne ausgebildet, und steigt eine Innenfläche der Kurzseite schräg an, wobei die maximale Steigung unter dem Überlauf vorzugsweise weniger als 60° beträgt. Diese Kurzseite liegt derjenigen gegenüber, auf welcher die Pflanzenteile eingefüllt werden. Die sanft ansteigende Innenfläche bewirkt, dass sich keine Ruhezone bildet, in der das Wasser in der Strömungswanne steht und sich die Pflanzenteile anstauen.

In noch einer Weiterbildung der letztgenannten bevorzugten Ausführungsform sind weitere Düsen im Abstand von weniger als 0,5 m von der weiteren Kurzseite der Strömungswanne, vorzugsweise an der weiteren Kurzseite der Strömungswanne, angeordnet, um eine Strömung zu erzeugen, die entlang der weiteren Kurzseite zu dem Überlauf gerichtet ist. Hierdurch wird eine Anstauung von Pflanzenteilen mit noch größerer Sicherheit vermieden.

In noch einer bevorzugten Ausführungsform ist die Abtransporteinrichtung höhenverstellbar. Die Eintauchtiefe der Abtransporteinrichtung in das Wasser in der Strömungswanne kann an die Pflanzenteile angepasst werden, die abtransportiert werden sollen. Die Stellung der Abtransporteinrichtung kann optimiert werden. Dies ist erforderlich, da die Dichteunterschiede der Pflanzenteile relativ zu Wasser gering sind. Für Paprika wurden experimentell für unterschiedliche Paprikasorten unterschiedliche optimale Einstellungen gefunden.

In noch einer bevorzugten Ausführungsform sind in einer Transportfläche der Abtransporteinrichtung Öffnungen ausgebildet, so dass das Fluid die Transportfläche, auf welcher die Pflanzenteile transportiert werden, durchströmen kann. Es bildet sich somit keine Ruhezone in dem Fluid vor der Abtransporteinrichtung, so dass die Pflanzenteile, die an der Fluidoberfläche schwimmen, auf die Transportfläche geschwemmt werden.

In noch einer bevorzugten Ausführungsform weist die Abtransporteinrichtung ein Förderband oder Förderkette auf. Eine derartige Abtransporteinrichtung lässt sich besonders einfach und zuverlässig ausbilden.

In einer Weiterbildung der letztgenannten bevorzugten Ausführungsform ist das Förderband oder die Förderkette als Stabgeflecht ausgebildet. Stabgeflecht ist stabil und alterungsbeständig. Viele Öffnungen, durch welche das Fluid durchströmen kann, sind für Stabgeflecht zudem typisch.

In noch einer bevorzugten Ausführungsform ist die Größentrenneinrichtung als ein Sieb ausgebildet. Siebe sind besonders robust und technisch einfach zu handhaben. Das Sieb weist Öffnungen auf, die eine minimale Abmessung von höchstens 0,5 Zentimeter haben, so dass ein kugelförmiger Körper mit einem Durchmesser von mehr als 0,5 Zentimeter nicht durch das Sieb hindurch fallen kann. Die minimale Abmessung kann an die zu trennenden Fruchtstücke angepasst werden.

In einer Weiterbildung der letztgenannten bevorzugten Ausführungsform ist das Sieb am Boden der Strömungswanne angeordnet. In der Strömungswanne wird das Trennen von Pflanzenteilen dadurch erleichtert, dass diese aufgrund des Wassers nicht aneinander haften. Dies erleichtert es insbesondere, kleine Samen von Paprikastücken aus Gewebe der Fruchtwand zu trennen. Es wird somit ein synergetischer Effekt erzielt.

In einer Weiterbildung der letztgenannten bevorzugten Ausführungsform ist unter dem Sieb eine Kammer mit einem Absperrorgan angeordnet. Die Samen, die sich in der Kammer ansammeln, können während des normalen Betriebes über das Absperrorgan entleert werden.

In einer anderen Weiterbildung der letztgenannten bevorzugten Ausführungsform ist das Sieb als Tischfläche eines Vibrationstisches ausgebildet, der eingerichtet ist, Pflanzenteile, die von dem Fluid durch die Auslasseinrichtung transportiert werden, weiter zu fördern. Durch die Vibrationen des Vibrationstisches werden nicht nur die Pflanzenteile weiter befördert, sondern im Falle von Paprikas auch die Samen, welche an Paprikastücken aus Gewebe der Fruchtwand anhaften, gelöst. Es wird somit ein synergetischer Effekt erzielt. Dieses Sieb kann auch in Kombination mit dem vorher genannten Sieb verwendet werden. Statt des Vibrationstisches kann auch ein Förderband verwendet werden, um die Pflanzenteile weiter zu fördern.

In noch einer bevorzugten Ausführungsform ist eine Berieselungseinrichtung vorgesehen, um Pflanzenteile, die an der Fluidoberfläche schwimmen, voneinander zu lösen. Aufgrund des hohen Durchsatzes der Vorrichtung zum Trennen von Pflanzenteilen bilden die Pflanzenteile eine dicke Schicht, die an der Fluidoberfläche schwimmt. Es kommt daher vor, dass Pflanzenteile, die ein höheres spezifisches Gewicht als das Fluid haben, an der Oberfläche schwimmen, weil sie mit weiteren Pflanzenteilen verhakt sind und von diesen daran gehindert werden abzusinken. Durch das Fluid, welches von der Berieselungseinrichtung auf die Pflanzenteile an der Fluidoberfläche gespritzt wird, lösen sich die verhakten Pflanzenteile voneinander, so dass die Pflanzenteile, die ein höheres spezifisches Gewicht als das Fluid haben, absinken können.

Die vorliegende Erfindung betrifft ferner ein Verfahren zum Trennen von Pflanzenteilen, wobei ein Fluid durch mehrere Düsen einer Einlasseinrichtung eingelassen wird, die an zwei gegenüberliegenden Längsseiten einer Strömungswanne angeordnet sind, um eine gleichmäßige Strömung zu erzeugen, die weitgehend frei von Turbulenzen ist. Vorteilhafterweise können Pflanzenteile bei einem hohen Durchsatz zuverlässig nach dem spezifischen Gewicht getrennt werden.

In noch einer bevorzugten Ausführungsform umfassen die Pflanzenteile Gewebe aus dem Stielansatz, Gewebe aus der Fruchtwand, planzetales Gewebe und Samen von Paprikas. Das Verfahren hat sich in der Praxis als besonders geeignet für Paprikas erwiesen.

Im Folgenden wird die Erfindung mit Bezugnahme auf die Zeichnungen näher beschrieben. Es zeigen:
FIG. 1 eine perspektivische Ansicht der Vorrichtung zum Trennen von Pflanzenteilen;
FIG. 2 eine Ansicht einer Längsseite der Vorrichtung zum Trennen von Pflanzenteilen teilweise im Schnitt;
FIG. 3 eine Ansicht der gegenüberliegenden Längsseite;
FIG. 4 eine Vorderansicht der Vorrichtung zum Trennen von Pflanzenteilen; und
FIG. 5 eine Draufsicht der Vorrichtung zum Trennen von Pflanzenteilen.

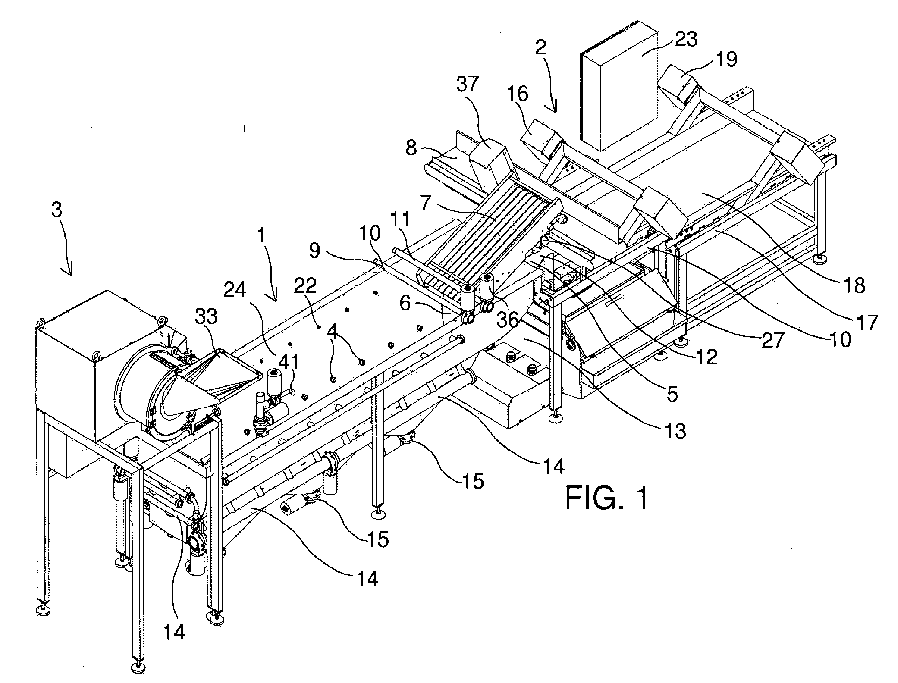

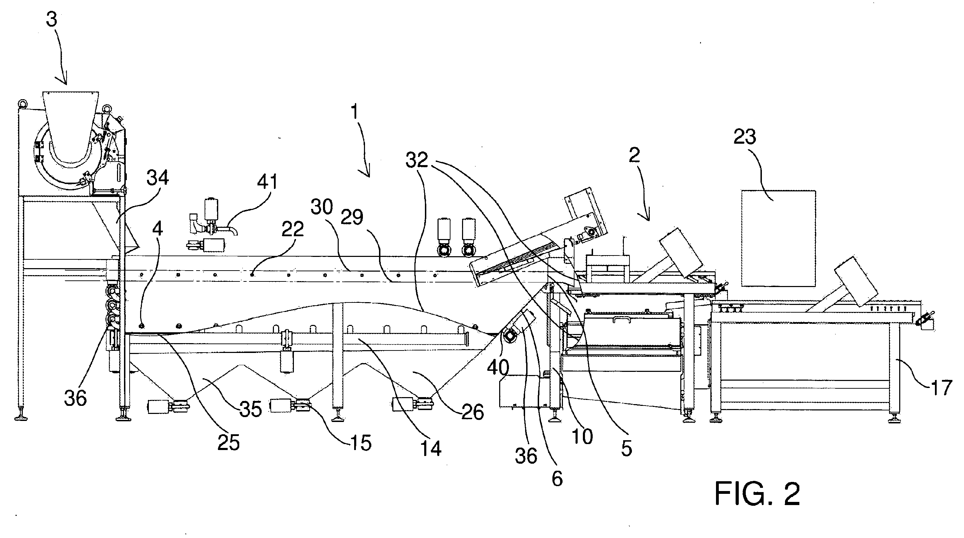

FIG. 1 zeigt eine perspektivische Ansicht der Vorrichtung zum Trennen von Pflanzenteilen. Die Vorrichtung zum Trennen von Pflanzenteilen umfasst eine längliche Strömungswanne 1 und eine Fördereinrichtung 2, welche die Pflanzenteile aus der Strömungswanne 1 fördert bzw. weiterfördert, nachdem die Pflanzenteile die Strömungswanne 1 verließen. Die Vorrichtung ist speziell für das Trennen von zerkleinerten Paprikastücken ausgelegt. Die zerkleinerten Paprikastücke werden mit Hilfe einer Zerkleinerungsvorrichtung 3 aus ganzen Paprikas erzeugt. Hierzu werden ganze Paprikas in einen Einfülltrichter 33 der Zerkleinerungsvorrichtung 3 eingefüllt. Die Zerkleinerungsvorrichtung 3 zerteilt die ganzen Paprikas in kleine Stücke oder Streifen, deren minimale Abmessungen normalerweise größer als 5 mm sind. Die Paprikastücke verlassen die Zerkleinerungsvorrichtung 3 über den Zufuhrschacht 34 (siehe FIG. 2) und fallen in die Strömungswanne 1, die mit Wasser gefüllt ist. Die ganzen Paprikas bestehen aus einer Fruchtwand, einem planzentalen Gewebe, Samen und einem Stielansatz. Das planzentale Gewebe und der Stielansatz haben eine geringere Dichte als Wasser. Die Fruchtwand und die Samen haben eine größere Dichte als Wasser. Paprikastücke aus Fruchtwandgewebe und Samen sinken im Wasser folglich ab, während Paprikastücke aus planzetalem Gewebe und dem Stielansatz an der Wasseroberfläche schwimmen. Viele der Samen sind auch fest mit dem planzetalen Gewebe verbunden und schwimmen mit dem planzetalen Gewebe an der Wasseroberfläche.

In der Strömungswanne 1 sind mehrere Düsen vorgesehen, durch welche Wasser in die Strömungswanne 1 eingebracht wird und eine Strömung in der Strömungswanne 1 erzeugt wird. Neun Düsen (verdeckt) sind an einer Kurzseite der Strömungswanne 1, auf welcher sich die Zerkleinerungsvorrichtung 3 befindet, auf drei unterschiedlichen Niveaus vorgesehen. Diese Düsen sorgen dafür, dass sämtliche Paprikastücke von der Kurzseite weggetrieben werden. Zwei Düsen 40 (siehe FIG. 2) sind auf der gegenüberliegenden Kurzseite vorgesehen. Weitere Düsen 4, 22 sind auf beiden Längsseiten der Strömungswanne 1 in zwei Reihen angeordnet. Jeweils zwei Düsen 4, 22 sind untereinander angeordnet. Entlang einer dieser zwei Reihen beträgt der Abstand der Düsen 4 bzw. 22 vorzugsweise weniger als 20 Zentimeter, noch besser weniger als 15 Zentimeter. Auf eine Länge von 10 Zentimeter entlang einer Längsseite ist somit durchschnittlich mindestens eine Düse 4 bzw. 22 angeordnet. Eine ausreichende Anzahl von Düsen 4 bzw. 22 und ein geringer Abstand der Düsen 4 bzw. 22 sind erforderlich, um eine Strömung zu erzeugen, die von der Zerkleinerungsvorrichtung 3 weggerichtet ist und weitgehend frei von Turbulenzen ist, so dass Paprikastücke besser nach dem spezifischen Gewicht getrennt werden können. Die unteren Düsen 4 sind für eine höhere Durchflusszahl als die oberen Düsen 22 ausgelegt, die nahe bei der Wasseroberfläche angeordnet sind, und die Strömung in einer dünnen Schicht an der Wasseroberfläche bestimmen. Die Winkelposition und somit die Düsenströmungsrichtung der unteren Düsen 4 und der oberen Düsen 22 sind verstellbar.

Die Strömungswanne 1 hat schräg abfallende Seitenwände 24. Am Boden der Strömungswanne 1 ist ein herausnehmbares Sieb 25 vorgesehen (siehe FIG. 2). Die Sieböffnungen sind so dimensioniert, dass ihre kleinsten Abmessungen kleiner als die kleinsten Abmessungen der Paprikastücke sind, üblicherweise also kleiner als 5 mm. Diese Paprikastücke können daher nicht durch das Sieb fallen, während ein Großteil der Samen entlang der abfallenden Seitenwände 24 gleitet und durch das Sieb 25 in eine Kammer 26 fällt (siehe FIG. 2). Die Kammer 26 weist drei trichterförmige Vertiefungen 35 mit schrägen Seitenwänden auf, die jeweils in einem Absperrorgan 15 münden, das als Scheibenventil ausgebildet ist und über dem sich die Samen ansammeln. Wenn sie eine große Menge Samen angesammelt hat, werden Auslässe 15 so lange geöffnet, bis die Samen in den trichterförmigen Vertiefungen 35 mit dem Wasser abgeflossen sind.

Die Paprikastücke, die an der Wasseroberfläche schwimmen, d.h. Paprikastücke aus dem Stielansatz und dem planzetalen Gewebe, treiben zu einem Förderband 7 der Fördervorrichtung 2, das von einem Motor 37 angetrieben wird, bis unter die Wasseroberfläche reicht und aus Stabgeflechtdraht gebildet ist, so dass das Wasser hindurch fließen kann und sich keine Ruhezone vor dem Förderband 7 bildet. Das Förderband 7 ist höhenverstellbar um ein Gelenk 27 schwenkbar, so dass die Eintauchtiefe in das Wasser in der Strömungswanne 1 veränderlich ist. Die Paprikastücke, die aufgrund ihres spezifischen Gewichts an der Wasseroberfläche schwimmen, können das Förderband nicht seitlich passieren, werden daher von dem Förderband 7 abtransportiert und fallen auf ein quer verlaufendes Förderband 8, welches die Paprikastücke weiter transportiert. Stromabwärts vor dem Förderband 7 ist eine Berieselungseinrichtung 9 vorgesehen, die zwei Rohre 10, 11 umfasst. An der Unterseite der Rohre 10, 11 sind Düsen ausgebildet. Das aus diesen Düsen strömende Wasser trifft auf die Paprikastücke, die an der Oberfläche schwimmen, und löst sie kurzfristig voneinander. Paprikastücke, die ein höheres spezifisches Gewicht als Wasser haben, d.h. Paprikastücke aus Fruchtwand, sich aber mit Paprikastücken verhakt haben, die ein geringeres spezifisches Gewicht als Wasser haben, und deshalb an der Oberfläche schwimmen, sinken daher auf den Boden der Strömungswanne 1 und werden nicht von dem Förderband 7 abtransportiert.

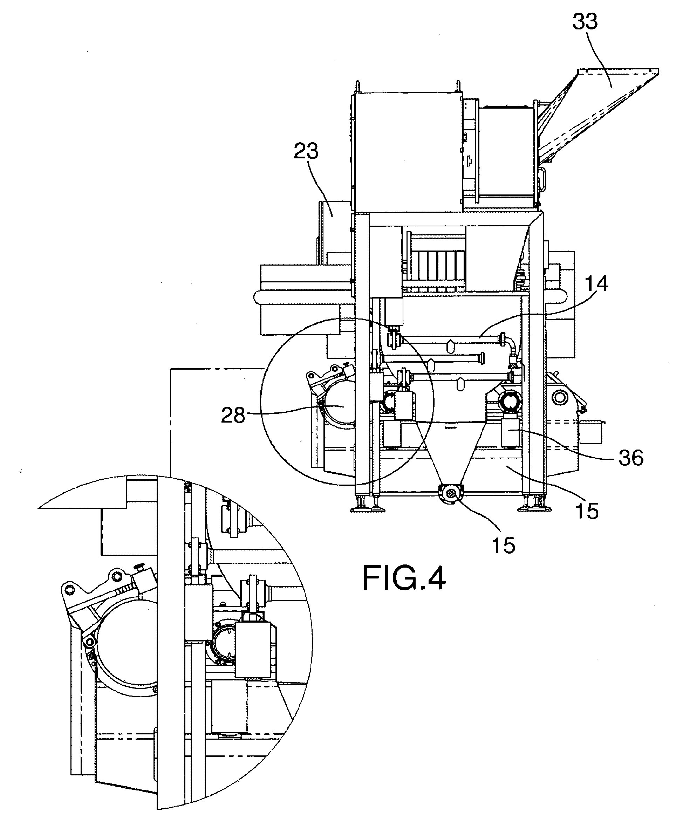

Die Kurzseite, die von der Zerkleinerungsvorrichtung 3 abgewandt ist, weist einen Überlauf 5 und eine schräge abfallende Innenfläche 6 auf. An dieser Kurzseite bildet sich eine zur Wasseroberfläche hin gerichtete Strömung. Die zwei Düsen 40 sind so ausgerichtet, dass diese Strömung verstärkt wird. Die Paprikastücke, die aufgrund des spezifischen Gewichts auf den Boden der Strömungswanne 1 abgesunken sind, werden von der zur Wasseroberfläche hin gerichteten Strömung an die Wasseroberfläche durch den Überlauf 5 zu einem Vibrationstisch 10 der Fördereinrichtung 2 mitgeführt, der von zwei Motoren 16 zu Vibrationen angeregt wird. Eine Tischfläche 12 des Vibrationstisches 10 ist siebartig ausgebildet. Sie besteht beispielsweise aus dicht nebeneinander angeordneten Rundstäben oder einem gestanzten Blech. Das überlaufende Wasser strömt zunächst zwischen den Rundstäben und dann durch einen Feinfilter hindurch, der als Trommelfilter 28 (siehe FIG. 4) ausgebildet ist, und wird in einem Wassertank 13 aufgefangen. Weitere Samen, die nicht durch das Sieb 25 am Boden der Strömungswanne 1 gefallen sind, fallen ebenfalls durch die siebartige Tischfläche 12 des Vibrationstisches 10 und werden in einer Auffangkammer aufgefangen, die über dem Wassertank 13 angeordnet ist. Die Sieböffnungen der Tischfläche 12 sind wiederum so dimensioniert, dass ihre geringsten Abmessungen kleiner als die kleinsten Abmessungen der Paprikastücke sind, üblicherweise also kleiner als 5 mm. Diese Paprikastücke können daher nicht durch die siebartige Tischfläche 12 fallen, während die Samen durch diese hindurch fallen. Der Vibrationstisch 10 ist so ausgebildet, dass die Paprikastücke, die nicht durch die Tischfläche 12 fallen, sich von dem Überlauf 5 wegbewegen. Hinter dem Vibrationstisch 10 ist ein weiterer Vibrationstisch 17 vorgesehen, auf dem die Paprikastücke weiter von dem Überlauf 5 wegbefördert werden. Eine siebartige Tischfläche 18 des weiteren Vibrationstisches 17 wird ebenfalls von zwei Motoren 19 zu Vibrationen angeregt. Die siebartige Tischfläche 18 ist gleichartig ausgebildet wie die siebartige Tischfläche 12, so dass weitere Samen durch die siebartige Tischfläche 18 in einen darunter angeordneten Auffangbehälter fallen.

Von dem Wassertank 13 wird das Wasser wieder über Zuleitungen 14 durch die Düsen in die Strömungswanne 1 gepumpt, so dass das Wasser fortwährend von dem Wassertank 13 durch die Zuleitungen 14, die Düsen, die Strömungswanne 1 und den Überlauf 5 zurück zu dem Wassertank 13 zirkuliert. Die Wasserzufuhr wird dabei durch Absperrorgane 36 geregelt, die als Proportionalventile 36 ausgebildet sind. Die Proportionalventile 36 und die Scheibenventile 15 werden von einer zentralen Steuerung 23 gesteuert. Diese Steuerung steuert ebenfalls die weiteren Einrichtungen der Vorrichtung zum Trennen von Pflanzenteilen wie die Pumpe (nicht gezeigt), die Motoren 16, 19 und eine Wasserzufuhreinrichtung 41. Zur Überwachung des Wasserstands ist in dem Wassertank 13 eine Wasserstandsmesseinrichtung vorgesehen. Wenn der Wasserstand unter ein Sollniveau abfällt, wird über die Wasserzufuhreinrichtung 41 Wasser nachgefüllt.

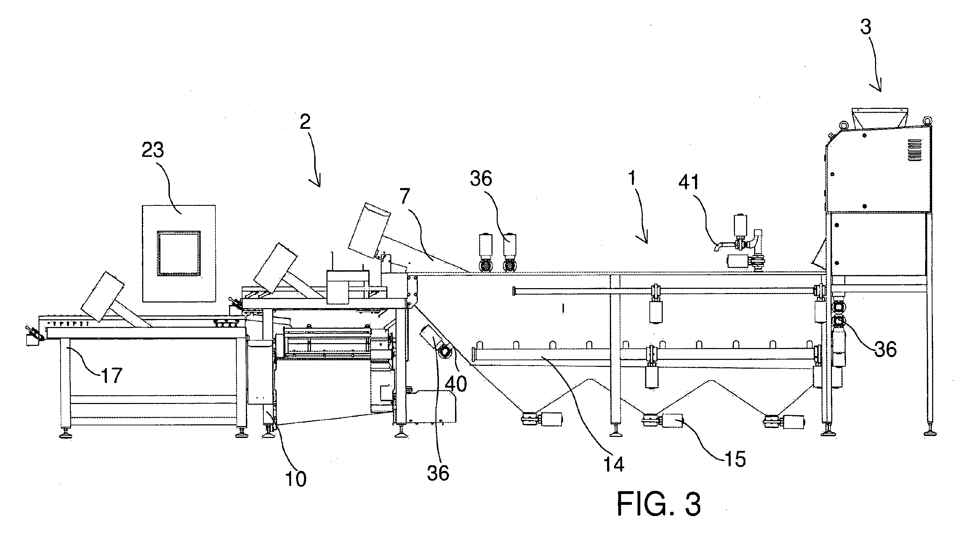

FIG. 2 und FIG. 3 zeigen Ansichten der gegenüberliegenden Längsseite der Vorrichtung zum Trennen von Pflanzenteilen. In FIG. 2 ist die Vorrichtung teilweise im Schnitt dargestellt, so dass der Blick auf das Innere der Strömungswanne freigegeben ist und Details wie die Anordnung des Siebs 19 zu erkennen sind. Die Linien 32 sind Schnittlinien. Die Linie 29 stellt den Wasserstand bei ausgeschalteter Pumpe dar. Die Linien 30 stellt den Wasserstand bei eingeschalteter Pumpe dar. Auf der Vorderansicht FIG. 4 ist insbesondere der Trommelfilter 28 zu erkennen.

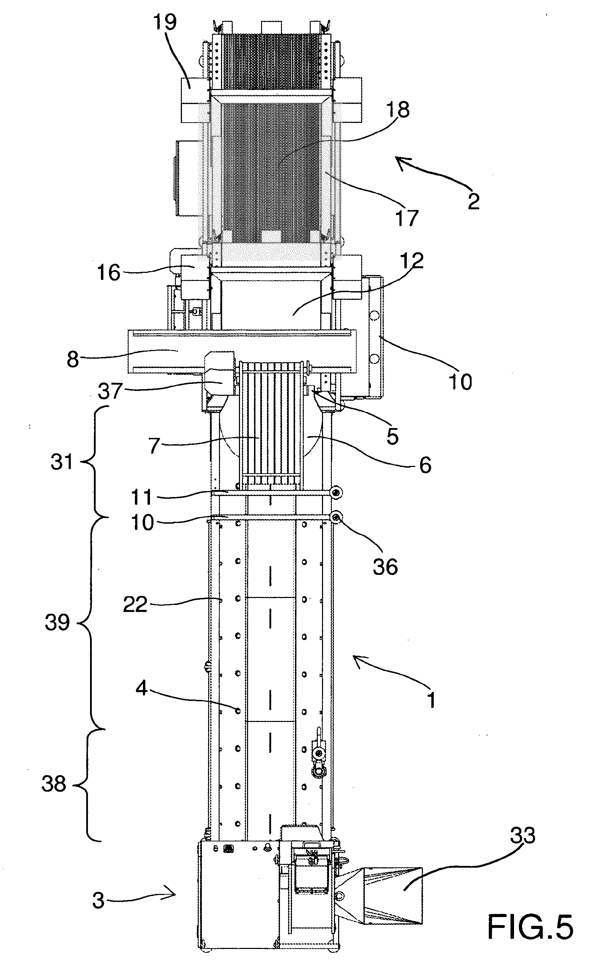

FIG. 5 eine Draufsicht der Vorrichtung zum Trennen von Pflanzenteilen, aus der besondere Längenabmessungen der Strömungswanne hervorgehen. Die Strömungswanne 1 kann in einen Einfüllbereich 38, einen Sinkscheidungsbereich 39 und einen Austragungsbereich 31 unterteilt werden. Im Einfüllbereich 38 gelangen die Paprikastücke in die Strömungswanne 1. In diesem Bereich 38 sind Turbulenzen ohne größere Bedeutung. Die Strömung muss nur ausreichend stark sein, um die Paprikastücke schnell zu beschleunigen und weiterzuführen. Für eine Vorrichtung mit einem Durchsatz von 2t Paprika / Stunde und einer Strömungswannenbreite von weniger als einem Meter, soll der Einfüllbereich 38 vorzugsweise eine Länge von weniger als 1,5 Meter haben. Im Sinkscheidungsbereich 39 sollen keine Turbulenzen, sondern eine gleichmäßige Strömung vorhanden sein. In diesem Bereich sind daher die Düsen 4 bzw. 22 in zwei Reihen entlang der beiden Längsseiten im Abstand von weniger als 20 Zentimeter, noch besser weniger als 15 Zentimeter, angeordnet. Eine ausreichende Länge von über 0,5 Meter, vorzugsweise über 2 Meter, ist erforderlich, damit die Pflanzenteile mit unterschiedlichen spezifischen Gewichten voneinander abgeschieden werden. Im Austragungsbereich 31 werden die Paprikastücke durch das Förderband 7 ausgetragen. Im Austragungsbereich 31 bildet sich aufgrund der schräg abfallenden Innenfläche 6 der Kurzseite eine aufwärts gerichtete Strömung aus. Dieser Bereich muss lediglich ausreichend lang sein für die Anordnung der des Förderbands 5, eine Länge von einem Meter ist ausreichend.

## Patentansprüche

1. Vorrichtung zum Trennen von Pflanzenteilen mit einer Strömungswanne (1), die eine Einlasseinrichtung (4, 22) und eine Auslasseinrichtung (5) für ein Fluid aufweist, einer Abtransporteinrichtung, die eingerichtet ist, Pflanzenteile von der Oberfläche des Fluids in der Strömungswanne (1) abzutransportieren, und einer Größentrenneinrichtung (25, 12, 18), die eingerichtet ist, Pflanzenteile unterschiedlicher Größe voneinander zu trennen, **dadurch gekennzeichnet, dass** die Einlasseinrichtung mehrere Düsen (4, 22) aufweist, die an zwei gegenüberliegenden Längsseiten der Strömungswanne (1) angeordnet sind, um eine gleichmäßige Strömung zu erzeugen, die weitgehend frei von Turbulenzen ist.

2. Vorrichtung nach Anspruch 1, **dadurch gekennzeichnet, dass** die Düsen (4, 22) auf jeder der Längsseiten in mindestens zwei in Längsrichtung verlaufenden Reihen angeordnet sind.

3. Vorrichtung nach Anspruch 1 oder 2, **dadurch gekennzeichnet, dass** weitere Düsen an einer Kurzseite der Strömungswanne (1) angeordnet sind.

4. Vorrichtung nach einem der vorhergehenden Ansprüche, **dadurch gekennzeichnet, dass** die Auslasseinrichtung als Überlauf (5) ausgebildet ist.

5. Vorrichtung nach Anspruch 4, **dadurch gekennzeichnet, dass** der Überlauf (5) an einer weiteren Kurzseite der Strömungswanne (1) ausgebildet ist, und dass eine Innenfläche (6) der Kurzseite schräg ansteigt, wobei die maximale Steigung unter dem Überlauf (5) vorzugsweise weniger als 60° beträgt.

6. Vorrichtung nach Anspruch 5, **dadurch gekennzeichnet, dass** weitere Düsen (40) im Abstand von weniger als 0,5 m von der weiteren Kurzseite der Strömungswanne (1), vorzugsweise an der weiteren Kurzseite der Strömungswanne (1), angeordnet sind, um eine Strömung zu erzeugen, die entlang der weiteren Kurzseite zu dem Überlauf (5) gerichtet ist.

7. Vorrichtung nach einem der vorhergehenden Ansprüche, **dadurch gekennzeichnet, dass** die Abtransporteinrichtung (7) höhenverstellbar ist.

8. Vorrichtung nach einem der vorhergehenden Ansprüche, **dadurch gekennzeichnet, dass** in einer Transportfläche der Abtransporteinrichtung (7) Öffnungen ausgebildet sind, so dass das Fluid die Transportfläche durchströmen kann.

9. Vorrichtung nach einem der vorhergehenden Ansprüche, **dadurch gekennzeichnet, dass** die Abtransporteinrichtung ein Förderband (7) oder Förderkette (7) aufweist.

10. Vorrichtung nach Anspruch 9, **dadurch gekennzeichnet, dass** das Förderband (7) oder die Förderkette (7) als Stabgeflecht ausgebildet ist.

11. Vorrichtung nach einem der vorhergehenden Ansprüche, **dadurch gekennzeichnet, dass** die Größentrenneinrichtung als ein Sieb (25, 12, 18) ausgebildet ist.

12. Vorrichtung nach Anspruch 11, **dadurch gekennzeichnet, dass** das Sieb (25) am Boden der Strömungswanne (1) angeordnet ist, und dass unter dem Sieb (25) eine Kammer (35) mit einem Absperrorgan (15) angeordnet ist.

13. Vorrichtung nach Anspruch 11, **dadurch gekennzeichnet, dass** das Sieb als Tischfläche (12, 18) eines Vibrationstisches (12, 17) ausgebildet ist, der eingerichtet ist, Pflanzenteile, die von dem Fluid durch die Auslasseinrichtung (5) transportiert werden, weiter zu fördern.

14. Vorrichtung nach einem der vorhergehenden Ansprüche, **dadurch gekennzeichnet, dass** eine Berieselungseinrichtung (9) vorgesehen ist, um Pflanzenteile, die an der Oberfläche schwimmen, voneinander zu lösen.

15. Verfahren zum Trennen von Pflanzenteilen, wobei ein Fluid in eine Strömungswanne (1) durch eine Einlasseinrichtung (4, 22) eingelassen wird und durch eine Auslasseinrichtung (5) ausgelassen wird, und Pflanzenteile von der Oberfläche des Fluids in der Strömungswanne (1) von einer Abtransporteinrichtung (7) abtransportiert werden, wobei Pflanzenteile unterschiedlicher Größe durch eine Größentrenneinrichtung (25, 12, 18) voneinander getrennt werden, **dadurch gekennzeichnet, dass** das Fluid durch mehrere Düsen (4, 22) der Einlasseinrichtung eingelassen wird, die an zwei gegenüberliegenden Längsseiten der Strömungswanne (1) angeordnet·sind, um eine gleichmäßige Strömung zu erzeugen, die weitgehend frei von Turbulenzen ist.

## Claims

1. An apparatus for separating plant pieces with a flow tub (1) having an inlet means (4, 22) and an outlet means (5) for a fluid, a removal device which is adapted to remove plant pieces from the surface of said fluid in said fluid tub (1), and a size separating means (25, 12, 18) adapted to separate plant pieces of various sizes, **characterized in that** said inlet means comprises a plurality of nozzles (4, 22) which are arranged at two opposite longitudinal sides of said flow tub (1) to produce a smooth flow substantially free of turbulence.

2. The apparatus according to claim 1, **characterized in that** the nozzles (4, 22) are arranged on each of said longitudinal sides in at least two longitudinally extending rows.

3. The apparatus according to claim 1 or 2, **characterized in that** further nozzles are arranged on a short side of said flow tub (1).

4. The apparatus according to one of the preceding claims, **characterized in that** said outlet means is formed as an over-flow (5).

5. The apparatus according to claim 4, **characterized in that** said overflow (5) is formed on another short side of said flow tub (1), and that an inner surface (6) of said short side is sloped, wherein the maximum slope below said overflow (5) is preferably less than 60 degrees.

6. The apparatus according to claim 5, **characterized in that** further nozzles (40) are arranged at a distance of less than 0.5 m from said other short side of the flow tub (1), preferably on said other short side of the flow tub (1), to produce a flow which is directed along said other short side to said overflow (5).

7. The apparatus according to one of the preceding claims, **characterized in that** said removal device (7) is height-adjustable.

8. The apparatus according to one of the preceding claims, **characterized in that** holes are formed in a transport plane of the removal device (7), so that said fluid can flow through said transport plane.

9. The apparatus according to one of the preceding claims, **characterized in that** said transport means comprises a conveyor belt (7) or a conveying chain (7).

10. The apparatus according to claim 9, **characterized in that** the conveyor belt (7) or the conveying chain (7) is designed as a rod mesh.

11. The apparatus according to one of the preceding claims, **characterized in that** said size separating device is formed as a sieve (25, 12, 18).

12. The apparatus according to claim 11, **characterized in that**:said sieve (25) is disposed at the bottom of said flow tub (1), and that a chamber (35) with a valve (15) is arranged below said sieve (25).

13. The apparatus according to claim 11, **characterized in that** said sieve is formed as a table surface (12, 18) of a vibrating table (17, 12) which is adapted to convey plant pieces which are transported from the fluid through the outlet (5).

14. The apparatus according to one of the preceding claims, **characterized in that** a spraying device (9) is provided in order to dissociate plant pieces floating on the surface.

15. A method for separating plant pieces, wherein a fluid in a fluid tub (1) is introduced through an inlet device (4, 22) and is drained through an outlet (5), and wherein plant pieces from the surface of said fluid in the fluid tub (1) are removed by a removal means (7), wherein plant pieces of different seizes are separated by a size separation means (25, 12, 18), **characterized in that** said fluid is introduced through a plurality of nozzles (4, 22) of said inlet means which are arranged at two opposite longitudinal sides of the flow tub (1) to produce a smooth flow substantially free of turbulence.

## Revendications

1. Installation pour la séparation de parties de plante avec une cuvette d'écoulement (1) ayant un moyen d'entrée (4, 22) et un moyen de sortie (5) pour un fluide, un dispositif d'évacuation, qui est configuré de sorte à évacuer des parties de plantes à partir de la surface du liquide dans la cuvette d'écoulement (1), et un dispositif de séparation dimensionnelle (25, 12, 18), qui est conçu pour séparer des parties de plantes de dimensions différentes les unes des autres, **caractérisée en ce que** le moyen d'entrée comprend une pluralité de buses (4, 22) qui sont disposées sur deux côtés longitudinaux opposés de la cuvette d'écoulement (1), pour obtenir un écoulement régulier, substantiellement exempt de turbulences.

2. Installation selon la revendication 1, **caractérisée en ce que** lesdites buses sont disposées sur chacun des deux côtés longitudinaux opposés de la cuve d'écoulement (1) sur au moins deux rangées longitudinales.

3. Installation selon l'une des revendications 1 ou 2, **caractérisée en ce que** d'autres buses sont disposées sur un petit côté de la cuvette d'écoulement.

4. Installation selon l'une des revendications précédentes, **caractérisée en ce que** la sortie est formée en trop-plein (5).

5. Installation selon la revendication 4, **caractérisée en ce que** le trop-plein (5) est formé à un autre petit côté de la cuvette d'écoulement (1), et **en ce qu'**une face intérieure (6) du petit côté est inclinée, la pente maximale au-dessous du trop-plein (5) étant de préférence inférieure à 60°.

6. Installation selon la revendication 5, **caractérisée en ce que** des buses (40) sont disposées distantes de moins de 0,5 m de L'autre petit côté de la cuvette d'écoulement (1), de préférence sur l'autre petit côté de la cuvette d'écoulement (1), afin de générer un flux qui est dirigé le long de l'autre petit côté vers le trop-plein (5).

7. Installation selon l'une des revendications précédentes, **caractérisée en ce que** le dispositif d'évacuation (7) est réglable en hauteur.

8. Installation selon l'une quelconque des revendications précédentes, **caractérisée en ce que** sur une face de transport du dispositif d'évacuation (7) des ouvertures sont disposées, de sorte quelle fluide peut s'écouler à travers la surface de transport.

9. Installation selon l'une quelconque des revendications précédentes, **caractérisée en ce que** le dispositif d'évacuation comprend une bande transporteuse (7) ou une chaîne transporteuse (7).

10. installation selon la revendication 9, **caractérisée en ce que caractérisé en ce que** la bande transporteuse (7) ou la chaîne transporteuse (7) est disposée en treillis métallique.

11. Installation selon l'une des revendications précédentes, **caractérisée en ce que** le dispositif de séparation dimensionnelle est disposé en tamis (25, 12, 18).

12. Installation selon la revendication 11, **caractérisée en ce que** le tamis (25) est disposé au fond de la cuvette d'écoulement (1), et qu'au-dessous du tamis (25) est disposée une chambre (35) avec un élément d'arrêt (15).

13. Installation selon la revendication 11, **caractérisée en ce que** le tamis est disposé en surface de table (12, 18) d'une table vibrante (17 12), ladite surface de table étant configurée de sorte à promouvoir la poursuite du mouvement des parties de plantes transportées par le fluide à travers le moyen de sortie (5).

14. Installation selon l'une des revendications précédentes, **caractérisée en ce qu'**un dispositif de pulvérisation (9) est prévu afin de séparer les parties de plantes, flottant à la surface.

15. Procédé de séparation de parties de plante, dans lequel un fluide est introduit dans une cuvette d'écoulement (1) au moyen d'un moyen d'entrée (4, 22) et évacué par un moyen de sortie (5), et des parties de plantes sont évacuées par un dispositif d'évacuation (7) de la surface du fluide dans la cuvette d'écoulement (1), des parties de plantes de dimensions différentes étant séparées par un dispositif de séparation dimensionnelle (25, 12, 18), **caractérisé en ce que** le fluide est introduit par une pluralité de buses (4, 22) du moyen d'entrée, qui sont disposées sur deux côtés longitudinaux opposés de la cuvette d'écoulement (1), pour obtenir un écoulement régulier, substantiellement exempt de turbulences.
